# EUROPEAN PATENT APPLICATION

(11) **EP 4 535 512 A2**
(43) Date of publication of application: **09.04.2025**
(21) Application number: 24199621.4
(22) Date of filing: 11.09.2024
(51) Int. Cl.: H01M 10/625, H01M 50/367

(54) **BATTERY PACK AND VEHICLE INCLUDING SAME**

(30) Priority: 15.09.2023 KR 20230123393
(71) Applicant: LG Energy Solution, Ltd., Seoul 07335 (KR)
(72) Inventor: LEE, Yong-Ho, 34122 Daejeon (KR); PARK, So-Jeong, 34122 Daejeon (KR); SONG, Jong-Min, 34122 Daejeon (KR); AHN, Jun-Young, 34122 Daejeon (KR); OH, Kwang-Keun, 34122 Daejeon (KR); JUNG, In-Hyuk, 34122 Daejeon (KR); YANG, Jin-Oh, 34122 Daejeon (KR)
(74) Representative: Plasseraud IP

(57) **Abstract**

A battery pack according to the present disclosure may include: a cell array structure including a plurality of battery cells; a pack case configured to accommodate the cell array structure and form a first venting path under the cell array structure; and a lower casing disposed at one end of the cell array structure inside the pack case and configured to form a second venting path communicating with the first venting path.

## Description

### TECHNICAL FIELD

The present disclosure relates to a battery pack, and more specifically, it relates to a battery pack configured to quickly discharge venting gas generated from a trigger cell to the outside of the pack case, and rapidly and efficiently dissipate heat to the pack case by conduction, thereby suppressing the risk of ignition in the battery pack, and a vehicle including the same.

### BACKGROUND ART

Recently, the demand for portable electronic products such as laptops, video cameras, and portable phones has rapidly increased, and the development of electric vehicles, energy storage batteries, robots, satellites, and the like has been accelerated, so in line with this, active research on high-performance secondary batteries capable of being repeated charged and discharged is underway.

Currently commercialized secondary batteries include nickel cadmium batteries, nickel hydrogen batteries, nickel zinc batteries, and lithium secondary batteries. Among these, lithium secondary batteries are in the spotlight for their advantages of free charging and discharging, a very low self-discharge rate, and high energy density as they have almost no memory effect, compared to nickel-based secondary batteries.

These lithium secondary batteries generally use lithium-based oxides and carbon materials as positive and negative electrode active materials, respectively. In addition, the lithium secondary batteries include positive and negative electrode plates coated with the positive and negative electrode active materials, respectively, an electrode assembly in which the positive and negative electrode plates are disposed with a separator therebetween, and an exterior case that seals and stores the electrode assembly with an electrolyte.

Meanwhile, lithium secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. To provide high voltage and high current, the lithium-ion secondary batteries are being used as a battery module or battery pack obtained by overlapping or stacking multiple battery cells as they are or mounted in cartridges or the like to assemble the same into a dense structure and then electrically connecting them.

Recently, research and development has been active on battery packs configured to include a single module or cell assembly with improved structural rigidity by densely disposing a plurality of cylindrical battery cells in the standing state and a pack frame surrounding the same. In particular, the single module or cell assembly is on the trend of increasing in its area.

However, if a thermal event such as thermal runaway occurs in any one battery cell inside the large-area cell assembly, combustible gas triggered in the trigger cell is ejected, and the ignited trigger cell itself becomes a heating electrode and they become ignition sources, causing heat accumulation, which may lead to cascading heat transfer to adjacent battery cells and explosion of the entire battery pack.

Therefore, it is desperately required to suppress the risk of ignition and delay or block heat transfer in the battery pack through a venting structure capable of quickly discharging venting gas released from the trigger cell to the outside of the pack case and a heat dissipation structure capable of quickly and efficiently conducting high-temperature heat or the like generated from the trigger cell to the outside before it accumulates.

### DISCLOSURE

### Technical Problem

The present disclosure has been designed to solve the problems of the related art, and therefore the present disclosure is directed to providing a battery pack in which venting gas generated from the trigger cell may be quickly discharged to the outside of the pack case, and in which heat or the like generated from the trigger cell may be quickly and efficiently dissipated before it accumulates, thereby suppressing the risk of ignition of the battery pack and delaying or blocking heat transfer therein.

### Technical Solution

According to one aspect of the present disclosure, there is provided a battery pack that includes:
- a cell array structure including a plurality of battery cells;
- a pack case configured to accommodate the cell array structure and to form a first venting path under the cell array structure; and
- a venting valve provided in the pack case, communicating fluidically with the first venting path and configured to discharge the venting gas from the pack case to the outside.

The first venting path of this battery pack may be configured to discharge venting gas generated from the battery cell to the outside through the venting valve by passing through the first venting path.

This battery pack may further include a lower casing disposed at one end of the cell array structure inside the pack case and configured to form a second venting path communicating fluidically with the first venting path and the venting valve.

According to another aspect of the present disclosure, there is provided a battery pack that includes:
- a cell array structure including a plurality of battery cells;
- a pack case configured to accommodate the cell array structure and to form a first venting path under the cell array structure; and
- a lower casing disposed at one end of the cell array structure inside the pack case and configured to form a second venting path communicating fluidically with the first venting path.

The battery packs according to the invention may comprise one or more of the following features, in any technically feasible combination.

The second venting path may be formed perpendicular to the first venting path.

A plurality of venting holes may be formed in the lower casing at positions corresponding to the first venting path in the longitudinal direction.

The pack case may have at least one venting valve provided on both sides thereof.

Alternatively, the pack case may have at least one venting valve on a single side thereof.

Alternatively, the pack case may have at least one venting valve on any side of the pack case.

The second venting path may be configured to discharge venting gas generated from the battery cells to the outside through the venting valve by passing through the second venting path.

The first venting path and the second venting path may be configured to discharge venting gas generated from the battery cell to the outside through the venting valve by passing through the first venting path and the second venting path.

Accordingly, venting gas generated from the battery cell may be discharged to the outside through the venting valve by passing through the first venting path and the second venting path.

The pack case may include a bottom plate configured to come into partial contact with and support the bottom of the cell array structure and having a longitudinal cross-section in a concavo-convex shape, and the first venting path may be formed by the concavo-convex shape.

The concavo-convex shape may comprise a plurality of raised parts, like ridges, and a plurality of recesses separating the raised parts.

The raised parts and the recesses may extend in straight paths, parallels to each other.

The first venting path may be formed in the recesses, between the raised parts.

The second venting path may be formed in an inner space of the lower casing.

The lower casing may be disposed at the level of the venting path, under the cell array structure.

The venting holes may be positioned at an end of the recesses of the concavo-convex shape and fluidically connect the first venting path to the second venting path.

The raised parts of the concavo-convex shape may be located between the venting holes.

The cell array structure may include: a plurality of unit cell groups, each unit cell group including battery cells from the plurality of battery cells and a cooling tube disposed in contact with the battery cells of the unit cell group; and a side frame disposed between the unit cell groups, and the first venting path may be formed parallel to the direction in which the battery cells, the cooling tube, and the side frame extend.

The cooling tube may extend in a single way from the port block along the length of the unit cell group, to be disposed in contact with each battery cell of the unit cell group.

The concavo-convex shape may comprise a convex section configured to come into contact with and support the cell array structure, and a concave section recessed from the convex section to form the first venting path. The convex section may be disposed in contact with the bottom of the side frame. The concave section may be disposed to be spaced apart from the bottom of the unit cell group, and the first venting path may extend through a space formed between the lower surface of the unit cell group and the concave section.

The invention also relates to a battery pack comprising: a cell array structure comprising a plurality of battery cells; a pack case configured to accommodate the cell array structure; and at least one port block disposed in thermal contact with the cell array structure and the pack case, each port block being configured to conduct heat generated from at least one of battery cell of the plurality of battery cells to the pack case, thereby forming a heat dissipation path.

The expression "thermal contact" implies that there is a thermal conduction path from the battery cells to the port block and to the pack case, crossing elements with a high thermal conduction. For example, the thermal conduction path may extend from the battery cells through a cooling tube in direct contact with the cells, through the port block connected to the cooling tube, and to the pack case in direct contact with the port block.

The port block may be made in a material with a high thermal conductivity, such as a metallic material.

The cell array structure may further comprise, for each port block, a cooling tube fixed to the port block and disposed in contact with battery cells of the plurality of battery cells.

In a first embodiment, the cell array structure may comprise a plurality of cooling tubes that extend substantially linearly through the cell array structure from the port block.

In a second embodiment, the cell array may comprise one or more cooling tubes that extend through the cell array structure in a non-straight path, such as a sinuous path.

For example, the cell array structure may include a single cooling tube that extends in a sinuous path to be in direct contact with each battery cell.

The cooling tubes may be connected to a port block at each end, to conduct the cooling fluid in a single way flow or be connected to a single port block at one end and conduct the fluid in a two-ways flow.

The conductive tubes may be made in a material with a high thermal conductivity, such as a metallic material.

The battery pack may further include a lower casing disposed at one end of the cell array structure inside the pack case.

Alternatively, the battery pack may include lower casings at both ends of the cell array structure.

The port block may be provided to extend outward from one end of the cell array structure, and the lower casing may be disposed to be lower than the cell array structure such that the port block is supported on an upper surface of the lower casing.

The battery pack may include a heat transfer member interposed between the lower casing and the port block.

The cell array structure may further comprise, for each port block, a cooling tube fixed to the port block and disposed in contact with battery cells of the plurality of battery cells, and the cooling tube may be provided to communicate fluidically with the port block.

The cooling tube may extend from the port block along a complete length of the cell array.

Each battery cell may be in direct contact with at least one cooling tube.

The heat dissipation path may be formed from the battery cell to the cooling tube, the port block, and the pack case, or from the battery cell to the pack case via the cooling tube, the port block, and the lower casing.

The heat dissipation path is a path of direct thermal conduction and is in addition to the cooling provided with a circulation of coolant fluid in the cooling tubes.

The invention also relates to a battery pack comprising:
a cell array structure comprising a plurality of battery cells;
a pack case configured to accommodate the cell array structure and to form a first venting path under the cell array structure;
a lower casing disposed at one end of the cell array structure inside the pack case and configured to form a second venting path communicating with the first venting path;
at least one port block disposed in thermal contact with the cell array structure and the pack case, each port block being configured to conduct heat generated from at least one battery cell of the plurality of battery cells to the pack case, thereby forming a heat dissipation path.

In addition, the invention relates to a vehicle including the battery pack described above.

### Advantageous Effects

According to one aspect of the present disclosure, the case pack is configured to form the first venting path under the cell array structure. Accordingly, the first venting path is not an element added to the pack case. Moreover, the cell array structure is located directly on the first venting path, *i.e.* no additional element is present between the cell array structure and the first venting path.
Consequently, the energy density and the safety of the battery pack of the present invention are improved.
Indeed, the height of the pack case is reduced thereby increasing the energy density of the battery pack of the present invention. Moreover, the venting gas generated from the battery cells of the cell array structure can be easily transferred to the first venting path thereby improving the cooling efficiency, and thus the safety, of the battery pack of the present invention.

According to one aspect of the present disclosure, the venting valve, the second venting path or both are provided as a separate structure to communicate with the first venting path formed under the cell array structure, thereby quickly discharging the venting gas generated from the trigger cell to the outside of the pack case.

According to another aspect of the present disclosure, the high-temperature heat generated in the trigger cell is able to be quickly and efficiently conducted to the pack case through the cooling tube and port block and then dissipated before it accumulates, thereby suppressing the risk of ignition of the battery pack and delaying or blocking heat transfer therein.

### DESCRIPTION OF DRAWINGS

FIG. 1 is a perspective view of a battery pack according to an embodiment of the present disclosure.
FIG. 2 is an exploded perspective view illustrating the primary elements of the battery pack in FIG. 1.
FIG. 3 is a perspective view of a battery pack from which a top cover plate is removed according to an embodiment of the present disclosure.
FIG. 4 is a perspective view of a pack case and a lower casing in a battery pack according to an embodiment of the present disclosure.
FIG. 5 is a top view of the battery pack shown in FIG. 4.
FIG. 6 is a diagram illustrating a cell array structure applied to a battery pack according to an embodiment of the present disclosure.
FIG. 7 is a perspective view of a port block connected to the cooling tube in FIG. 6.
FIG. 8 is a diagram illustrating an upper portion of a cell array structure accommodated in a battery pack according to an embodiment of the present disclosure.
FIG. 9 is a longitudinal cutaway perspective view of a battery pack according to an embodiment of the present disclosure.
FIG. 10 is a partially enlarged view of a longitudinal cross-section of a battery pack according to an embodiment of the present disclosure.
FIG. 11 is a diagram illustrating the movement path of venting gas in a battery pack according to an embodiment of the present disclosure.
FIG. 12 is a diagram illustrating a heat dissipation path through which heat is conducted and dissipated from a heating electrode in a battery pack according to an embodiment of the present disclosure.
FIG. 13 is a diagram illustrating a vehicle according to an embodiment of the present disclosure.

### BEST MODE

Hereinafter, preferred embodiments of the present disclosure will be described in detail with reference to the accompanying drawings.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

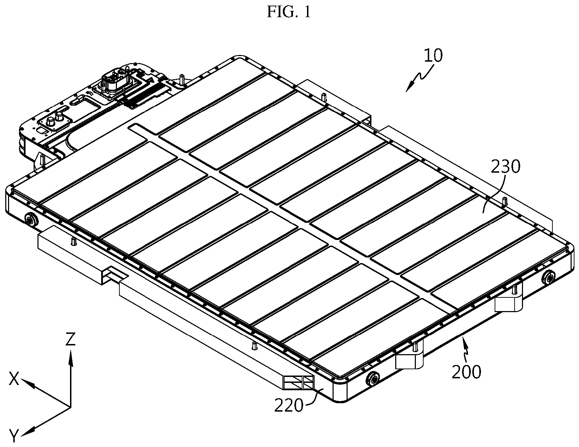

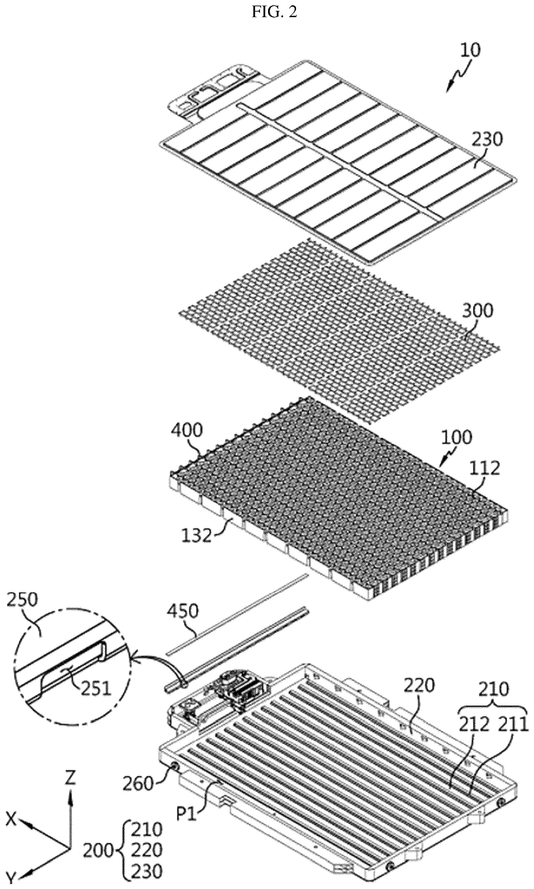

FIG. 1 is a perspective view of a battery pack according to an embodiment of the present disclosure, and FIG. 2 is an exploded perspective view illustrating the primary elements of the battery pack in FIG. 1.

Referring to FIGS. 1 and 2, a battery pack 10 according to an embodiment of the present disclosure includes a cell array structure 100 including a plurality of battery cells 112, a pack case 200 that accommodates the cell array structure 100, and a bus-bar assembly 300.

Referring to FIG. 2, the cell array structure 100 includes a plurality of battery cells 112.

The plurality of battery cells 112 may be secondary batteries and may be provided as cylindrical secondary batteries, pouch-type secondary batteries, or prismatic secondary batteries. Hereinafter, the present embodiment will be described on the assumption that the plurality of battery cells 112 is provided as cylindrical secondary batteries. These battery cells 112 may be a plurality of cylindrical secondary batteries arranged in the horizontal direction while standing in the upward/downward direction.

The plurality of battery cells 112 standing as described above may be stacked in the horizontal direction or on a horizontal plane (X-Y plane) as shown in FIG. 2. In addition, a cooling structure may be interposed between the plurality of battery cells 112, or a structure that maintains the distance between the battery cells 112 may be coupled to form a cell array structure 100, which is a single battery cell 112 assembly.

Although the cell array structure 100 will be described in detail later, it may be a single assembly (structure) configured in a flat plate having a predetermined thickness (e.g., the height of the battery cell 112). In addition, the cell array structure 100 may have a large area. Such a single structure having a large area may secure a certain level of structural rigidity.

A port block 400 connected to a cooling tube 115 may be provided on one side of the cell array structure 100 to protrude. The configuration and operational effects of the port block 400 will be described in detail later.

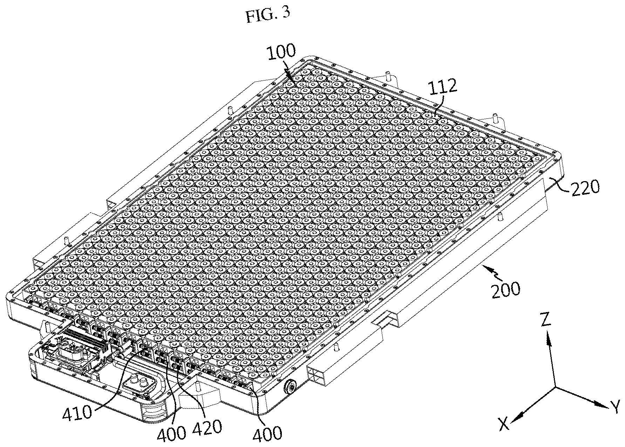

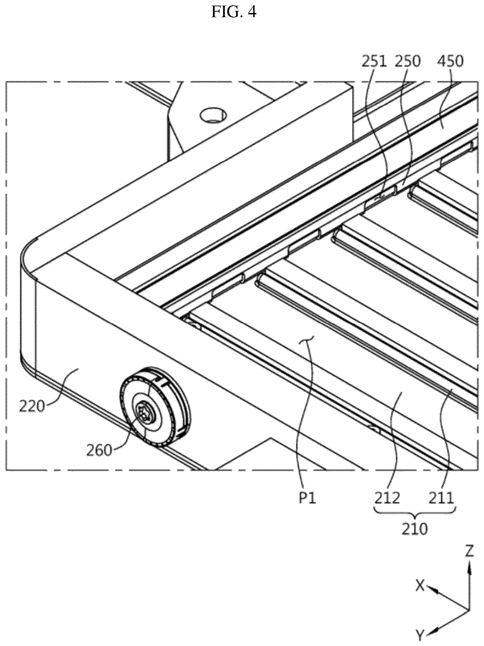

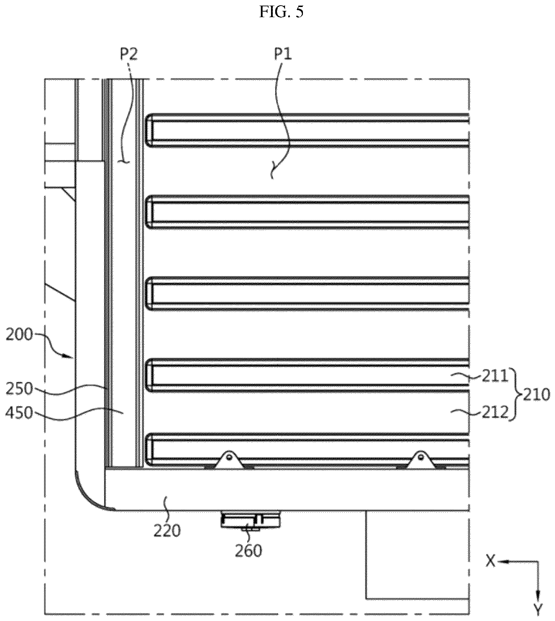

FIG. 3 is a perspective view of a battery pack from which a top cover plate is removed according to an embodiment of the present disclosure, FIG. 4 is a perspective view of a pack case and a lower casing 250 in a battery pack according to an embodiment of the present disclosure, and FIG. 5 is a top view of the battery pack shown in FIG. 4.

Referring to FIGS. 3 to 5 and the preceding FIGS. 1 and 2, the pack case 200 may accommodate the cell array structure 100. As shown in FIGS. 2 and 3, the pack case 200 may include a bottom plate 210, an outer side wall 220 disposed on the edge of the bottom plate 210, and a top cover plate 230. Here, the cell array structure 100 may be accommodated in the inner space formed by the bottom plate 210, the outer side wall 220, and the top cover plate 230.

The bottom plate 210 may be disposed at the bottom of the cell array structure 100. The bottom plate 210 may come into partial contact with the cell array structure 100 at the bottom thereof, thereby supporting the same.

To this end, the bottom plate 210 may be configured to have a longitudinal cross-section of a concavo-convex shape in one direction, as shown in FIG. 4. The convex structure and the concave structure may be formed parallel to the longitudinal direction (the X-axis direction) of the battery pack 10. In addition, the concavo-convex shape may be formed in a direction (the Y-axis direction) perpendicular to the direction (the X-axis direction) in which the plurality of battery cells 112, the cooling tube 115, and the side frames 130 extend. In addition, the concavo-convex shape may form a first venting path P1.

Specifically, the concavo-convex shape may be comprised of a convex section 211 that comes into contact with and supports the cell array structure 100, and a concave section 212 that is provided to be recessed from the convex section 211. Here, the cell array structure 100 may come into contact with the convex section 211 so as to be seated and supported thereon. In addition, the concave section 212 may be formed to be recessed from the convex section 211. As described above, the first venting path P1 may be formed in the space between the convex sections 211, that is, in the concave section 212. That is, the first venting path P1 may be a space formed between the lower surface of the unit cell group and the concave section 212. Accordingly, the first venting path P1 may be provided on the bottom plate 210 of the pack case 200 in the direction (the X-axis direction) in which the plurality of battery cells 112, the cooling tube 115, and the side frame 130 are arranged in a row.

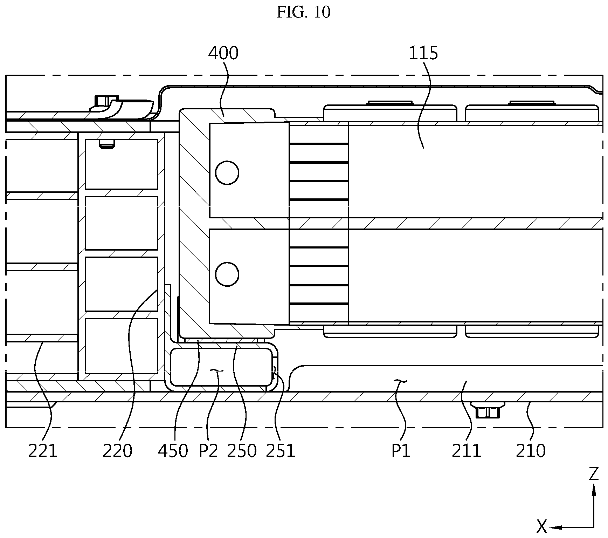

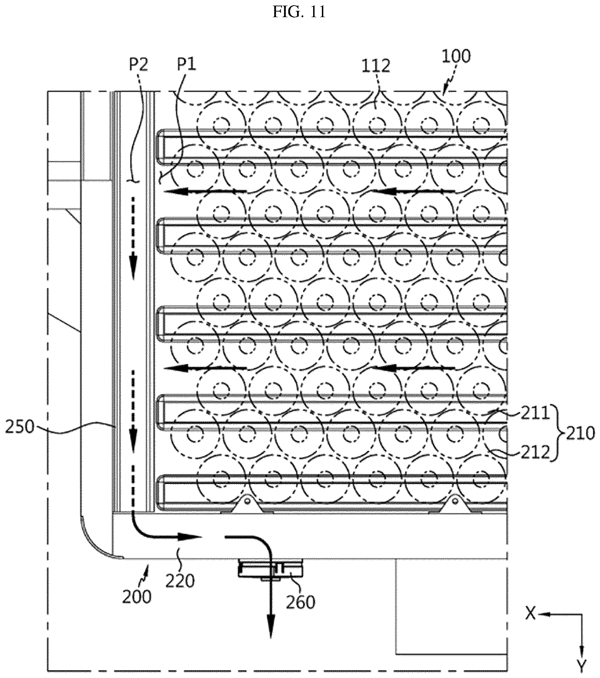

The outer side wall 220 indicates a type of frame that has a predetermined height and is disposed on the outer edge, and the bottom plate 210 may be coupled to the lower part of the outer side wall 220. The outer side wall 220 may have a hollow therein and may be provided with a plurality of reinforcement partitions 221 (see FIGS. 10 and 11). The outer side wall 220 may have at least one venting valve 260 provided on both sides thereof to be fluidically connected to the first venting path P1, a second venting path P2, which will be described later, or to the first venting path P1 and the second venting path P2.

Meanwhile, in the battery pack 10 according to the present embodiment, the pack case 200 may further include a lower casing 250 and a venting valve 260 forming a second venting path P2.

Referring to FIGS. 2, 4, and 5, the lower casing 250 may be disposed at one end of the cell array structure 100 inside the pack case 200. In addition, the lower casing 250 may be disposed lower than the cell array structure 100.

This lower casing 250 may form a second venting path P2. The second venting path P2 may be formed perpendicular to the first venting path P1. That is, the second venting path P2 may be formed in the direction (the Y-axis direction) perpendicular to the direction (the X-axis direction) in which the plurality of battery cells 112, the cooling tube 115, and the side frame 130 are arranged in a row. In addition, the length of the lower casing 250 may be substantially the same as the length of the cell array structure 100 in the width direction. Accordingly, both ends of the lower casing 250 may be disposed to almost reach the inner walls of the outer side wall 220 disposed on both sides of the pack case 200 in the width direction.

The lower casing 250 may have a plurality of venting holes 251 formed in the longitudinal direction at positions corresponding to the first venting path P1. The first venting path P1 and the second venting path P2 of the lower casing 250 may communicate with each other through the venting hole 251. Accordingly, venting gas and the like generated from one trigger cell may be vented in the X-axis direction through the first venting path P1 under the cell array structure 100, introduced into the lower casing 250 through the venting hole 251, and then rapidly discharged toward the outer side wall 220 (in the Y-axis direction) through the second venting path P2.

In addition, the venting valve 260 is provided in the pack case 200. At least one venting valve 260 may be provided on the outer side wall 220. The venting valve 260 is configured to forcibly discharge the venting gas from the pack case 200 to the outside. For example, a pair of venting valves 260 may be provided on the outer side wall 220 of the pack case 200 where both ends of the lower casing 250 come into contact. The venting gas or the like discharged through the above-described first venting path P1 and second venting path P2 is quickly discharged to the outside through the venting valve 260 adjacent thereto.

According to the present embodiment, venting gas generated from the trigger cell may be quickly discharged through the first venting path P1 formed under the cell array structure 100 and the second venting path P2. That is, it may be quickly vented to the edge of the pack case 200 and then quickly discharged to the outside through the venting valve 260. In this process, adverse effects on the adjacent battery cells 112 or other components may be minimized.

Hereinafter, the cell array structure 100 and the port block 400 according to an embodiment of the present disclosure will be described in detail.

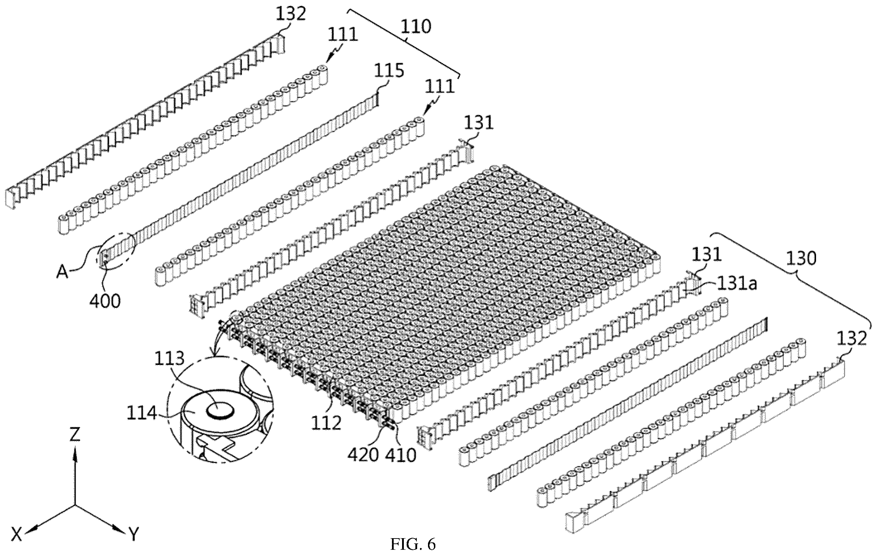

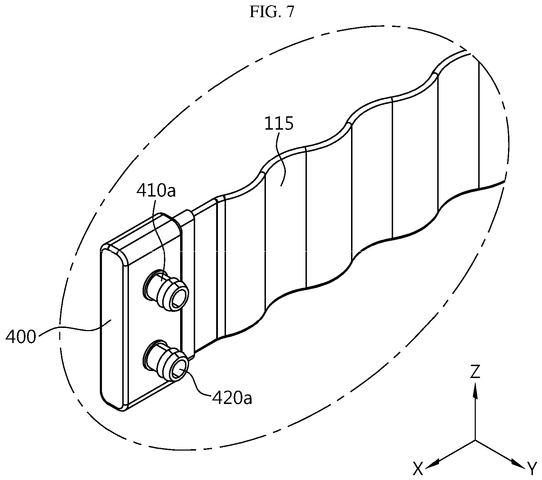

FIG. 6 is a diagram illustrating a cell array structure applied to a battery pack according to an embodiment of the present disclosure, and FIG. 7 is a perspective view of a port block connected to the cooling tube in FIG. 6.

Referring to FIGS. 6 and 7 and the preceding FIG. 2, the cell array structure 100 may include a unit cell group 110 that includes a plurality of battery cells 112 and a cooling tube 115 attached to the plurality of battery cells 112, and a side frame 130 disposed between the plurality of unit cell groups 110.

The battery cell 112 may have a tab portion 113 and an upper surface 114 at the top. The tab portion 113 may have a first polarity, and the upper surface 114 may have a second polarity. The tab portion 113 and the upper surface 114 may be electrically insulated from each other. The first polarity may correspond to a positive electrode of the battery cell 112, and the second polarity may correspond to a negative electrode of the battery cell 112. That is, the tab portion 113 may be a positive electrode of the battery cell 112, and the upper surface 114 may be a negative electrode of the battery cell 112. The tab portion 113 may be provided to protrude from the upper surface 114. Alternatively, the tab portion 113 may be configured not to protrude from the upper surface 114. For example, it may be configured in a so-called tab-less structure in which the tab portion 113 is disposed on the same plane as the upper surface. Since the configurations of the battery cell 112 are widely known to those skilled in the art at the time of filing the present disclosure, detailed descriptions thereof will be omitted from this specification.

A plurality of such battery cells 112 may constitute one cell array 111. That is, the cell arrays 111 may have a plurality of battery cells arranged in a row in the longitudinal direction (the X-axis direction) of the battery pack 10. The number of battery cells 112 constituting the cell array 111 is not limited.

In addition, the unit cell group 110 may include a pair of cell arrays 111 and a cooling tube 115 between them. That is, the unit cell group 110 may include a pair of (two) cell arrays 111 and a cooling tube 115 interposed between the pair of cell arrays 111. Here, the cooling tube 115 is an element that is in contact with one side of the cell array 111 to cool the battery cells 112. The cooling tube 115 may have an empty space through which a cooling medium flows, and may come into contact with the outer surfaces of the plurality of battery cells 112, so that heat generated from the battery cells 112 may directly transfer to the cooling medium.

A port block 400 may be connected to one end of the cooling tube 115. The port block 400 may be provided with ports 410a and 420b coupled to connection pipes 410 and 420. In addition, the port block 400 is an element constituting a heat dissipation path, which will be described in detail later.

The unit cell group 110 has inevitably a curved section because the plurality of battery cells 112 is disposed on the outer surface thereof. Accordingly, the cell array structure 100 may have a side frame 130 that accommodates the curved section and maintains and fixes the distance between the plurality of battery cells 112.

The side frame 130 may be provided between the unit cell group 110 and a neighboring unit cell group 110, or at the front end of the unit cell group 110. Specifically, the side frame 130 may include a side structure 131 interposed between the unit cell groups 110, and a side wall 132 interposed between the pack case 200 and the unit cell group 110.

The side structure 131 may be disposed between the pair of unit cell groups 110. The side structure 131 may be disposed between the unit cell group 110 and the neighboring unit cell group 110 to fix at least one pair of unit cell groups 110 and maintain the distance between the battery cells 112. As shown in FIGS. 2 and 3, the side structure 131 may have concave portions 131a formed corresponding to the outer shape of the unit cell group 110 on one surface and the other surface, respectively, in the longitudinal direction. The inner curvature or number of the concave portions 131a may be determined according to the specifications of the outer surface of the unit cell group 110 or battery cell 112 that is coupled to the side structure 131 by shape-matching.

A pair of side walls 132 may be disposed on both sides in the assembly direction (the Y-axis direction) in which the unit cell group 110 and the side structure 131 are assembled. The side wall 132 may be provided at the outermost portion of the cell array structure 100 in the width direction (the X-axis direction). One side of the side wall 132 may have the above-described concave portion 133 to receive one side of the unit cell group 110, and the other side (opposite side) may be configured to be flat so as to be in contact with the outer surface 220 of the pack case 200. Accordingly, the cell array structure 100 and the outer side wall 220 may be in contact with each other, removing gaps therebetween.

As described above, a plurality of unit cell groups 110 and a plurality of side structures 131 and side walls 132 may be assembled to configure one cell array structure 100. The cell array structure 100 with the above configuration may be a structure capable of ensuring structural rigidity without a separate module case.

Specifically, the side frame 130 may be disposed between the plurality of battery cells 112 in the cell array structure 100 or disposed on one side of the cell array 111, thereby fixing and supporting the plurality of battery cells 112. In addition, the side frame 130 may be attached to the plurality of battery cells 112 to form a single structure as a cell array structure 100 having a larger area than existing ones.

Hereinafter, the heat dissipation configuration according to the present embodiment will be described.

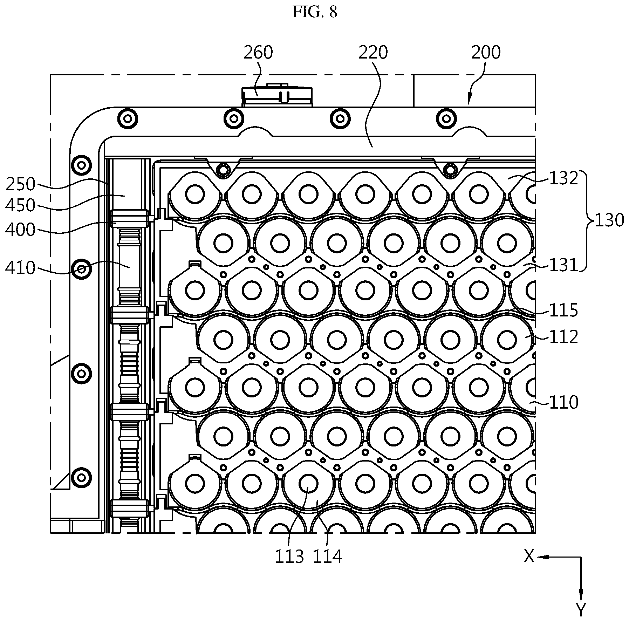

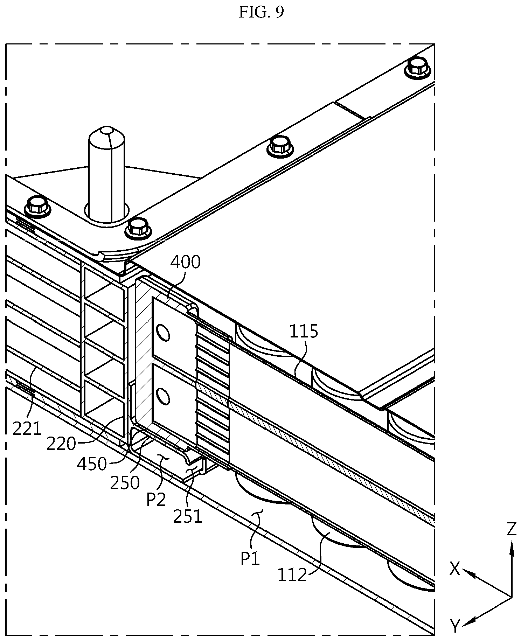

FIG. 8 is a diagram illustrating an upper portion of a cell array structure accommodated in a battery pack according to an embodiment of the present disclosure, FIG. 9 is a longitudinal cutaway perspective view of the battery pack according to an embodiment of the present disclosure, and FIG. 10 is an enlarged view of a longitudinal cross-section of a battery pack according to an embodiment of the present disclosure.

Referring to FIG. 8 and previous FIGS. 2, 6, and 7, the battery pack 10 according to the present embodiment may include a port block 400 connected to the cell array structure 100.

The port block 400 may be connected to one end of the cooling tube 115. The port block 400 may be provided such that the port block 400 and the cooling tube 115 communicate with each other. The port block 400 may be provided to protrude from the side of the cell array structure 100. That is, the port block 400 may be configured to protrude further than the end of the side frame 130 in the assembled state of the cell array structure 100. The port block 400 may have a space in which the cooling medium is temporarily stored, and may be connected to the adjacent port block 400 through a pair of connection pipes 410 and 420. The upper connection pipe 410 of the port block 400 may serve as an inlet passage for the cooling medium, and the lower connection pipe 420 may serve as an outlet passage for the cooling medium. Accordingly, the introduced cooling medium may move along the connection pipes 410 and 420 to be temporarily stored in the port block 400, and may enter and exit the cooling tube 115.

The port block 400 may partially connect the cell array structure 100 and the pack case 200 and conduct heat generated from any one of the battery cells 112 to the pack case 200, thereby configuring a heat dissipation path.

Specifically, the port block 400 may be provided to extend outward from one end of the cell array structure 100 and may partially connect the cell array structure 100 and the pack case 200. That is, as shown in FIG. 8, both ends of the port block 400 may come into contact with both the side of the cell array structure 100 and the outer side wall 220.

Referring to FIGS. 9 and 10, the lower casing 250 may be disposed at one end of the cell array structure 100 to be lower than the cell array structure 100. Accordingly, the port block 400 may be supported on the upper surface of the lower casing 250. In addition, one side of the lower casing 250 may be disposed in contact with the outer side wall 220.

A heat transfer member 450 may be included to be interposed between the lower casing 250 and the port block 400.

Accordingly, the port block 400 may be connected to the cooling tube 115 of the cell array structure 100, and the opposite side thereof may come into partial contact with the outer side wall 220, so that the bottom of the port block 400 may be supported on the lower casing 250 with the heat transfer member 450 interposed therebetween. That is, if high-temperature heat is generated in a heating electrode (ignition source) such as a trigger cell due to a thermal event, the generated high-temperature heat may be conducted to the cooling tube 115, transferred to the port block 400, and then conducted to the pack case 200 through the lower casing 250 in contact with the port block 400, so that various other components, especially the pack case 200, may function as thermal masses.

According to the present embodiment, the high-temperature heat or the like generated in the trigger cell may be quickly and efficiently conducted to the pack case 200 through the cooling tube 115 and port block 400 and then dissipated before it accumulates, thereby suppressing the risk of ignition of the battery pack 10 and delaying or blocking heat transfer therein.

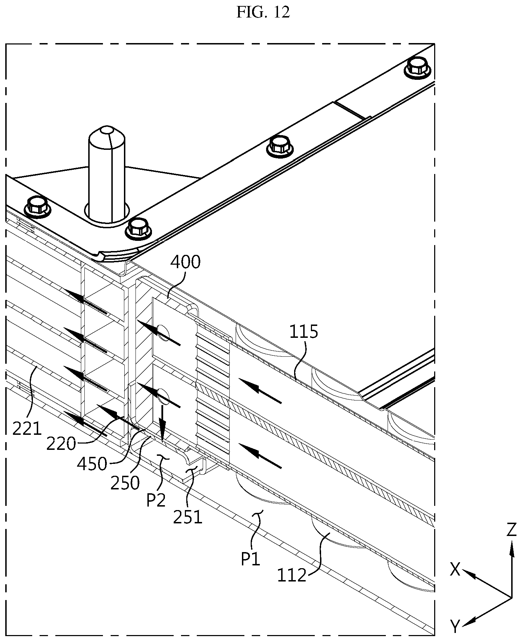

FIG. 11 is a diagram illustrating the movement path of venting gas in a battery pack according to an embodiment of the present disclosure, and FIG. 12 is a diagram illustrating a heat dissipation path through which heat is conducted and dissipated from a heating electrode in a battery pack according to an embodiment of the present disclosure.

Hereinafter, the flow of venting gas generated from a trigger cell of the cell array structure 100 in the battery pack 10 according to the present embodiment will be described with reference to FIGS. 1 to 11.

First, the process of assembling the cell array structure 100 to the pack case 200 will be briefly described.

Referring to FIG. 6, a plurality of battery cells 112 is provided as one cell array 111, and a cooling tube 115 is interposed between a pair of cell arrays 111 to be assembled to one unit cell group 110. A side structure 131 is interposed between the unit cell groups 110, and a side wall 132 is attached to the outermost portion of the battery pack 10 in the width direction (the Y-axis direction) to form one cell array structure 100. The cell array structure 100 may be further coated with adhesive resin or structural resin. In addition, assembling of the cell array structure 100 may require separate assembly equipment or pressurizing equipment.

Referring to FIGS. 3 and 11, the lower casing 250 may be coupled to the pack case 200. The lower casing 250 may communicate with the first venting path P1 and may form the second venting path P2 perpendicular to the first venting path P1.

As shown in FIG. 10, the cell array structure 100 may be seated on the pack case 200. The convex section 211 may come into contact with and support the bottom of the side structure 131 or the bottom of the side wall 132. When the cell array structure 100 is seated, the concave section 212 may be disposed to be spaced apart from the bottom of the unit cell group 110. As shown in FIGS. 3 and 4, the first venting path P1 may be formed as a space between the bottom of the unit cell group 110 and the concave section 212.

Referring to FIG. 11, the second venting path P2 may be provided as a separate structure to communicate with the first venting path P1 formed under the cell array structure 100, thereby quickly discharging the venting gas generated from the trigger cell to the outside of the pack case 200.

According to the present embodiment, venting gas generated from the trigger cell may be quickly discharged through the first venting path P1 formed under the cell array structure 100 and the second venting path P2. That is, the gas may be quickly vented to the edge of the pack case 200 and then quickly discharged to the outside through the venting valve 260. In this process, since high-temperature venting gas or the like is quickly discharged without contacting the adjacent battery cells 112 or other components, adverse effects such as heat accumulation in adjacent components may be minimized.

Next, the heat dissipation process will be explained.

Referring to FIG. 12, the heat dissipation path may be formed from the battery cell 112 to the cooling tube 115, the port block 400, and the pack case 200, or from the battery cell 112 to the pack case 200 via the cooling tube 115, the port block 400, and the lower casing 250.

Specifically, high-temperature heat generated in a heating electrode (ignition source) such as a trigger cell due to a thermal event may be conducted to the cooling tube 115, transferred to the port block 400, and then reach the pack case 200 through the lower casing 250 in contact with the port block 400. Alternatively, heat may be conducted directly from the port block 400 to the pack case 200, thereby forming the heat dissipation path. Accordingly, as described above, various other components, especially the pack case 200, may function as thermal masses.

As described above, the high-temperature heat generated in the trigger cell is able to be quickly and efficiently conducted to the pack case 200 through the cooling tube 115 and port block 400 and then dissipated before it accumulates, thereby suppressing the risk of ignition of the battery pack 10 and delaying or blocking heat transfer therein.

Meanwhile, referring back to FIG. 2, the battery pack 10 according to the present embodiment may include a bus-bar assembly 300. The bus-bar assembly 300 may be disposed on the cell array structure 100 to electrically connect the plurality of battery cells 112.

In addition, the battery pack 10 according to the present disclosure, although not shown, may further include various devices for controlling charging and discharging of the battery pack 10, such as a BMS (Battery Management System), a current sensor, a fuse, or the like.

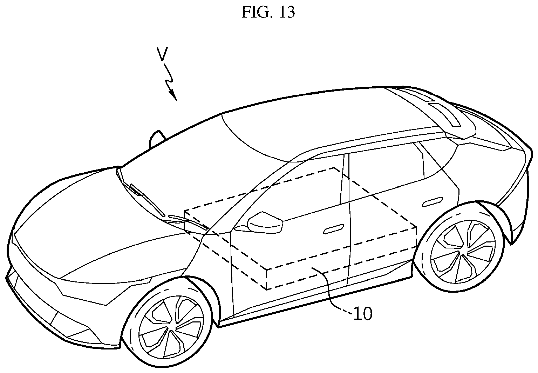

FIG. 13 is a diagram illustrating a vehicle according to an embodiment of the present disclosure.

Referring to FIG. 13, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the car body frame under the vehicle seat or the trunk space, and the arrangement sequence of the battery pack 10 may be reversed if necessary when installed in the vehicle.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack (10) comprising:
a cell array structure (100) comprising a plurality of battery cells (112);
a pack case (200) configured to accommodate the cell array structure (100) and to form a first venting path (P1) under the cell array structure (100); and
a venting valve (260) provided in the pack case (200), communicating fluidically with the first venting path (P1) and configured to discharge the venting gas from the pack case (200) to the outside.

2. The battery pack according to claim 1,
wherein the first venting path (P1) is configured to discharge venting gas generated from the battery cell to the outside through the venting valve (260) by passing through the first venting path (P1).

3. The battery pack (10) according to claim 1 or claim 2 further comprising a lower casing (250) disposed at one end of the cell array structure (100) inside the pack case (200) and configured to form a second venting path (P2) communicating fluidically with the first venting path (P1) and the venting valve (260).

4. The battery pack (10) according to claim 3,
wherein the second venting path (P2) is formed perpendicular to the first venting path (P1).

5. The battery pack (10) according to claim 3 or claim 4,
wherein a plurality of venting holes (251) is formed in the lower casing (250) at positions corresponding to the first venting path (P1) in the longitudinal direction (Y).

6. The battery pack (10) according to any one of claims 1 to 5,
wherein the pack case (200) has at least one venting valve (260) provided on both sides thereof.

7. The battery pack according to any one of claims 3 to 6,
wherein the second venting path (P2) is configured to discharge venting gas generated from the battery cell to the outside through the venting valve (260) by passing through the first venting path (P1) and the second venting path (P2).

8. The battery pack (10) according to any one of claims 1 to 7,
wherein the pack case (200) comprises a bottom plate (210) configured to come into partial contact with and support the bottom of the cell array structure (100) and having a longitudinal cross-section in a concavo-convex shape, and
wherein the first venting path (P1) is formed by the concavo-convex shape.

9. The battery pack (10) according to any one of claims 1 to 8,
wherein the cell array structure (100) comprises:
a plurality of unit cell groups (110), each unit cell group (110) comprising battery cells (112) from the plurality of battery cells (112) and a cooling tube (115) disposed in contact with the battery cells (112) of the unit cell group (110); and
a side frame (130) disposed between the unit cell groups (110), and
wherein the first venting path (P1) is formed parallel to the direction (X) in which the plurality of battery cells (112), the cooling tube (115), and the side frame (130) extend.

10. The battery pack (10) according to claim 8 or claim 9,
wherein the concavo-convex shape comprises a convex section (211) configured to come into contact with and support the cell array structure (110), and a concave section (212) recessed from the convex section (211) to form the first venting path (P1),
wherein the convex section (211) is disposed in contact with the bottom of the side frame (130),
wherein the concave section (212) is disposed to be spaced apart from the bottom of the unit cell group (110), and
wherein the first venting path (P1) extends through a space formed between the lower surface of the unit cell group (110) and the concave section (212).

11. A battery pack (10) comprising:
a cell array structure (100) comprising a plurality of battery cells (112);
a pack case (200) configured to accommodate the cell array structure (100); and
at least one port block (400) disposed in thermal contact with the cell array structure (100) and the pack case (200), each port block (400) being configured to conduct heat generated from at least one battery cell (112) of the plurality of battery cells (112) to the pack case (200), thereby forming a heat dissipation path.

12. The battery pack (10) according to claim 11,
further comprising a lower casing (250) disposed at one end of the cell array structure (100) inside the pack case (200).

13. The battery pack (10) according to claim 12,
wherein the port block (400) is provided to extend outward from one end of the cell array structure (100), and
wherein the lower casing (250) is disposed to be lower than the cell array structure (100) such that the port block (400) is supported on an upper surface of the lower casing (250).

14. The battery pack (10) according to claim 12 or claim 13,
comprising a heat transfer member (450) interposed between the lower casing (250) and the port block (400).

15. The battery pack (10) according to any one of claims 11 to 14,
wherein the cell array structure (100) further comprises, for each port block (400), a cooling tube (115) fixed to the port block (400) and disposed in contact with battery cells (112) of the plurality of battery cells (112), and
wherein the cooling tube (115) is provided to communicate fluidically with the port block (400).

16. The battery pack (10) according to claim 15,
wherein the heat dissipation path is formed from the battery cells (112) to the cooling tube (115), the port block (400), and the pack case (200), or from the battery cells (112) to the pack case (200) via the cooling tube (115), the port block (400), and the lower casing (250).

17. A vehicle comprising the battery pack (10) according to any one of claims 1 to 16.
